# EUROPÄISCHE PATENTSCHRIFT

(11) **EP 2 140 980 B1**
(45) Veröffentlichungstag und Bekanntmachung des Hinweises auf die Patenterteilung: **06.06.2012**
(21) Anmeldenummer: 09161453.7
(22) Anmeldetag: 29.05.2009
(51) Int. Cl.: B25C 1/00, B25C 1/06

(54) **Handgeführtes Eintreibgerät**
Manually operated fastening device
Dispositif d'enfoncement manuel

(30) Priorität: 03.07.2008 DE 102008040131
(43) Veröffentlichungstag der Anmeldung: 06.01.2010
(73) Patentinhaber: HILTI Aktiengesellschaft, 9494 Schaan (LI)
(72) Erfinder: Miescher, Stefan, 9494, Schaan (LI); Fielitz, Harald, 9470, Buchs (CH); Odoni, Walter, 9498, Planken (LI); Schiestl, Ulrich, 6800, Feldkirch (AT)
(74) Vertreter: Söllner, Oliver

(56) Entgegenhaltungen:
- EP-A- 1 642 684
- DE-A1-102005 000 089
- US-A- 4 821 937
- US-A- 5 649 661
- US-A1- 2007 199 970
- US-A1- 2007 267 459

## Beschreibung

Die vorliegende Erfindung betrifft ein handgeführtes Eintreibgerät der im Oberbegriff von Patentanspruch 1 genannten Art. Derartige handgeführte Eintreibgeräte nutzen als Antriebsenergie z. B. flüssige oder gasförmige Brennstoffe oder elektrische Energie, die z. B. in einem Akku bereitgestellt wird, und verfügen über einen versetzbar geführten Eintreibstössel über den Befestigungselemente in ein Werkstück eintreibbar sind.

Aus der DE 10 2005 000 089 A1 ist ein handgeführtes Eintreibgerät für Befestigungselemente bekannt, das eine Antriebsanordnung für einen in einer Führung versetzbar gelagerten Eintreibstössel aufweist. Die Antriebsanordnung weist dabei wenigstens ein über eine elektrisch betriebene Spanneinrichtung spannbares Antriebsfederelement auf. An einem Mündungsteil des Eintreibgeräts ist ein mit einem Schaltmittel kooperierender Anpressfühler angeordnet, wobei das Schaltmittel über eine Leitung elektrisch mit einer Steuereinheit verbunden ist. Das Schaltmittel sendet ein elektrisches Signal an die Steuereinheit, sobald der Anpressfühler durch Andrücken des Eintreibgeräts an einen Untergrund betätigt wird, und stellt so sicher, dass das Eintreibgerät nur ausgelöst werden kann, wenn es ordnungsgemäss an einen Untergrund angedrückt worden ist.

Ein derartiges Eintreibgerät ist nur begrenzt dazu geeignet, vor einem Eintreibvorgang ein Konstruktions-Hilfselement, wie z. B. einen Kabelbinder oder einen Schalungsanschlag auf die Mündung aufzusetzen, da in diesem Fall das Schaltmittel bereits vor dem Anpressen an einen Untergrund betätigt wird.

Die Aufgabe der vorliegenden Erfindung liegt darin, ein Eintreibgerät der vorgenannten Art dahingehend zu verbessern, dass Konstruktions-Hilfselemente auf die Mündung aufsetzbar und detektierbar sind und gleichzeitig eine Detektion des Anpressens an ein Werkstück bzw. einen Untergrund möglich ist.

Diese Aufgabe wird erfindungsgemäss durch die in Anspruch 1 genannten Massnahmen gelöst. Demnach ist ein versetzbar am Mündungsteil angeordneter Elementenfühler vorgesehen, der unabhängig vom Anpressfühler betätigbar ist, der in einer Ausgangsstellung das Auslösen eines Eintreibvorgangs verhindert und in einer Schaltstellung das Auslösen eines Eintreibvorgangs ermöglicht, wobei über den Elementenfühler das Aufstecken eines Konstruktions-Hilfselements auf das Mündungsteil detektierbar ist, und wobei ein Eintreibvorgang über den Auslöseschalter nur dann auslösbar ist, wenn sich sowohl der Elementenfühler als wie auch der Anpressfühler in ihrer jeweiligen Schaltstellung befinden. Hierdurch wird es möglich, dass das Eintreibgerät zum einen detektiert, dass ein Konstruktions-Hilfselement auf das Mündungsteil ordnungsgemäss aufgesteckt worden ist. Zum anderen wird ein nachfolgendes Anpressen des Eintreibgeräts an ein Werkstück oder Bauteil detektiert, wobei das Anpressen an ein Werkstück über den Anpressfühler vermittelt durch oder über das Konstruktions-Hilfselement hinweg detektierbar ist. Das Konstruktions-Hilfselement ist dabei z. B. ein Schalungsanschlag, Abstandhalter, Bewehrungshalter, Rohrschelle, Halteelement, Winkelelement, Deckenabhänger oder dgl..

Vorteilhaft ist der Elementenfühler über eine Stellkontur des Konstruktions-Hilfselements von seiner Ausgangsstellung in seine Schaltstellung überführbar, wodurch eine sichere Detektion des Konstruktions-Hilfselements bei korrektem Aufstecken auf das Mündungsteil gewährleistet ist.

Von Vorteil ist es ferner, wenn der Anpressfühler über ein versetzbar geführtes Tastelement des Konstruktions-Hilfselements von seiner Ausgangsstellung in seine Schaltstellung überführbar ist. Über das versetzbare Tastelement kann die Anpressbewegung auf einfache Weise an den Anpressfühler des Eintreibgerätes weitergeleitet werden.

Günstig ist es auch, wenn der Elementenfühler und der Anpressfühler hülsenförmig ausgebildet sind, wobei beide konzentrisch zueinander im Mündungsteil geführt sind. Durch diesen Aufbau kann eine funktional einfache und kompakte Bauweise erzielt werden.

In einer günstigen Weiterbildung ist der Elementenfühler innen im zweiten Anpressfühler angeordnet und umfasst einen Eintreibkanal für Befestigungselemente. Hierdurch wird es ermöglicht, die Stellkontur am Konstruktions-Hilfselement im Bereich seiner Führungshülse für das Befestigungselement anzuordnen, die üblicherweise in das Mündungsteil eingesteckt wird, um das Konstruktions-Hilfselement an dem Mündungsteil festzulegen.

Vorteilhaft ist ein Eintreibvorgang über den Auslöseschalter nur dann auslösbar, wenn der Elementenfühler wenigstens 0,3 Sekunden vor dem Anpressfühler in seine Schaltstellung überführt wird. Durch diese Massnahme wird eine Manipulation bzw. ein Umgehen der Sicherheitseinrichtung mit dem Anpressfühler und dem Elementenfühler deutlich erschwert.

Von Vorteil ist es ausserdem, wenn eine elektrische Steuereinheit vorgesehen ist und dem Elementenfühler ein erstes elektrisches Schaltmittel und dem Anpressfühler ein zweites elektrisches Schaltmittel zugeordnet ist, wobei beide Schaltmittel mit der Steuereinheit verbunden sind und wobei die Steuereinheit die Reihenfolge und den zeitlichen Abstand der Schaltsignale des ersten Schaltmittels und des zweiten Schaltmittels überwacht. Durch die Überwachung der Reihenfolge wird ein umgehen des Sicherheitssystems stark erschwert.

In den Zeichnungen ist die Erfindung in einem Ausführungsbeispiel dargestellt.

Es zeigen:
- Fig. 1: ein erfindungsgemässes Eintreibgerät im Längsschnitt in seiner Ausgangsstellung,
- Fig. 2: ein Konstruktions-Hilfselement an einer Mündung des Eintreibgeräts gemäss Fig. 1 in Schnittansicht,
- Fig. 3: das Konstruktions-Hilfselement aus Fig. 2 an der Mündung des Eintreibgeräts in Schnittansicht, in einer an ein Werkstück angesetzten Stellung.

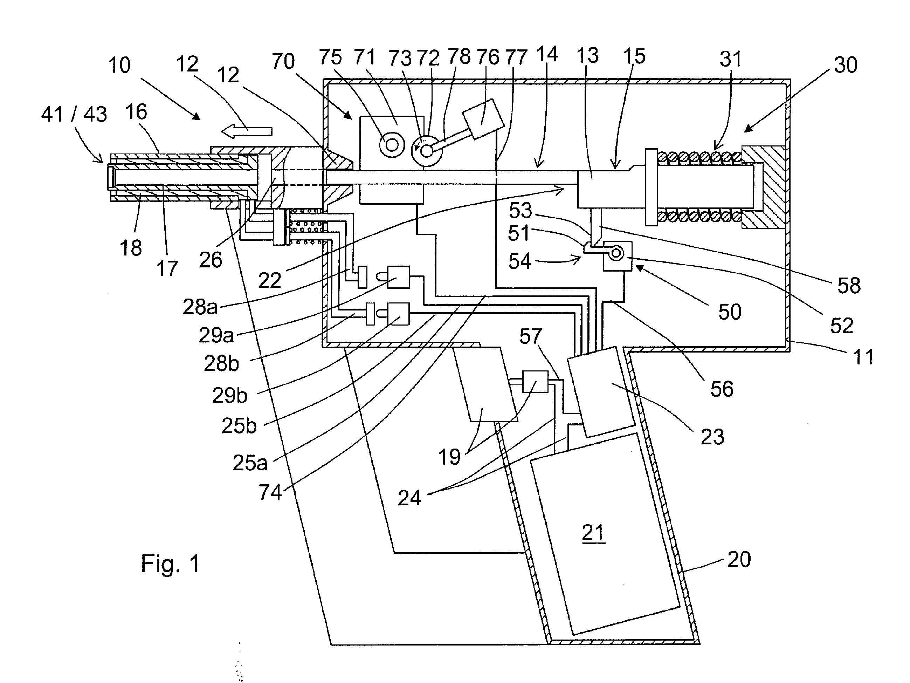

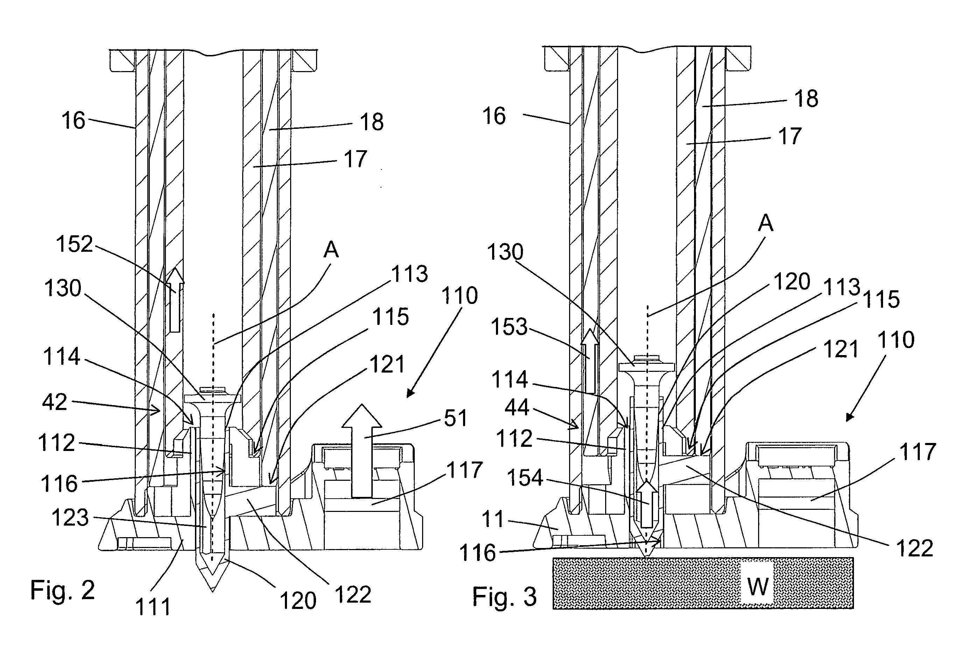

Das in den Figuren 1 und 2 dargestellte Eintreibgerät ist als elektrisch betriebenes Eintreibgerät 10 ausgebildet, das mit einer netzunabhängigen Stromversorgung ausgestattet ist. Das Eintreibgerät 10 weist ein Gehäuse 11 und eine darin angeordnete, insgesamt mit 30 bezeichnete Antriebsanordnung für einen Eintreibstössel 13 auf, der in einer Führung 12 versetzbar geführt ist. Der Eintreibstössel 13 weist dabei einen Eintreibabschnitt 14 für ein Befestigungselement 130 und einen Kopfabschnitt 15 auf.

An dem in Eintreibrichtung 27 liegenden Ende der Führung 12 schliesst sich ein Mündungsteil 16 an diese an, die einen koaxial zu der Führung verlaufenden Führungskanal 26 aufweist.

Die Antriebsanordnung 30 beinhaltet ein Antriebsfederelement 31, welches sich mit einem Ende indirekt am Gehäuse 11 abstützt und welches mit einem anderen Ende an dem Kopfabschnitt 15 des Eintreibstössels 13 angreift.

In der aus Fig. 1 ersichtlichen Ausgangsstellung 22 des Eintreibstössels 13 ist dieser elastisch gegen das Antriebsfederelement 31 vorgespannt.

In der Ausgangsstellung 22 ist der Eintreibstössel 13 durch eine insgesamt mit 50 bezeichnete Sperreinrichtung gehalten, die eine Klinke 51 aufweist, die in einer Sperrstellung 54 (siehe Fig. 1) an einer Sperrfläche 53 an einem Vorsprung 58 des Eintreibstössels 13 angreift und diesen gegen die Kraft des Antriebsfedermittels 31 festhält. Die Klinke 51 ist dabei an einem Stellmotor 52 gelagert und über diesen in eine in Fig. 1 nicht dargestellte Freigabestellung überführbar, wie nachfolgend noch beschrieben wird. Der Stellmotor 52 ist über eine elektrische erste Steuerleitung 56 mit einer elektrischen Steuereinheit 23 verbunden.

Das Eintreibgerät 10 weist ferner noch einen Handgriff 20 auf, an dem ein Auslöseschalter 19 zum Auslösen eines Eintreibvorganges mit dem Eintreibgerät 10 angeordnet ist. In dem Handgriff 20 ist ferner noch eine insgesamt mit 21 bezeichnete Stromversorgung angeordnet, über die das Eintreibgerät 10 mit elektrischer Energie versorgt wird. Vorliegend beinhaltet die Stromversorgung 21 wenigstens einen Akkumulator, wie z. B. einen Ni-MH Akku oder einen Li-Ionen Akku. Die Stromversorgung 21 ist über elektrische Versorgungsleitungen 24 sowohl mit der Steuereinheit 23 als auch mit dem Auslöseschalter 19 verbunden. Die Steuereinheit 23 ist dabei ferner noch über eine Schalterleitung 57 mit dem Auslöseschalter 19 verbunden.

An dem Mündungsteil 16 des Eintreibgeräts 10 sind ein Anpressfühler 17 und ein Elementenfühler 18 angeordnet, die beide hülsenförmig ausgebildet und in einem erweiterten Abschnitt des Führungskanals 26 des Mündungsteils 16 versetzbar geführt sind. In Fig. 1 sind der Anpressfühler 17 und der Elementenfühler 18 dabei in ihrer jeweiligen Ausgangstellung 41, 42 dargestellt. Der innenliegende Elementenfühler 17, der einen Eintreibkanal für Befestigungselemente umfasst, ist mit einem ersten Stellmittel 28a verbunden, das dazu ausgelegt ist ein elektrisches erstes Schaltmittel 29a, wie einen Schalter, zu betätigen, wenn der Elementenfühler 17 entgegen der Setzrichtung 27 bis in seine Schaltstellung 42 bewegt wird (siehe Fig. 2).

Der zwischen dem Elementenfühler 17 und dem Mündungsteil 16 angeordnete Anpressfühler 18 ist mit einem zweiten Stellmittel 28b verbunden, das dazu ausgelegt ist ein elektrisches zweites Schaltmittel 29b, wie einen Schalter, zu betätigen, wenn der Anpressfühler 18 entgegen der Setzrichtung 27 bis in seine Schaltstellung 44 bewegt wird (siehe Fig. 3). Ein Setzvorgang über den Auslöseschalter 19 ist dabei nur dann möglich, wenn beide Schaltmittel 29a, 29b in der Reihenfolge: 1. Elementenfühler 17 und 2. Anpressfühler 18 betätigt werden. Und zwar muss zunächst das erste Schaltmittel 29a und dann zeitversetzt um mindestens 0,3 Sekunden das zweite Schaltmittel 29b betätigt werden.

Die Schaltmittel 29a, 29b sind dabei jeweils über eine Schaltmittelleitung 25 elektrisch mit der Steuereinheit 23 verbunden.

An dem Eintreibgerät 10 ist ferner noch eine insgesamt mit 70 bezeichnete Spanneinrichtung angeordnet. Diese Spanneinrichtung 70 umfasst einen Motor 71 über den eine Antriebsrolle 72 antreibbar ist. Der Motor 71 ist über eine zweite Steuerleitung 74 elektrisch mit der Steuereinheit 23 verbunden und kann über diese in Betrieb gesetzt werden, z. B. wenn sich der Eintreibstössel 13 in seiner in Eintreibrichtung 27 liegenden Endposition befindet oder wenn das Eintreibgerät wieder vom Werkstück W abgehoben wird. Der Motor 71 weist ein Abtriebsmittel 75, wie ein Abtriebsrad, auf, das mit der Antriebsrolle 72 koppelbar ist. Die Antriebsrolle 72 ist dazu drehbar an einem längsverstellbaren Stellarm 78 eines als Solenoid ausgebildeten Stellmittels 76 gelagert. Das Stellmittel 76 ist dabei über eine Stellmittelleitung 77 mit der Steuereinheit 23 verbunden. Im Betrieb dreht sich die Antriebsrolle 72 in Richtung des gestrichelt angedeuteten Pfeils 73.

Wird das Eintreibgerät 10 über einen hier nicht dargestellten Hauptschalter in Betrieb genommen, dann stellt die Steuereinheit 23 zunächst sicher, dass sich der Eintreibstössel 13 in seiner aus Fig. 1 ersichtlichen Ausgangsstellung 22 befindet. Ist dieses nicht der Fall, dann wird die Antriebsrolle 72 vom Stellmittel 76 an das bereits über den Motor 71 in Drehung versetzte Abtriebsmittel 75 heranbewegt und mit diesem eingekuppelt. Gleichzeitig kuppelt die Antriebsrolle 72 an dem Eintreibstössel 13 ein, so dass dieser über die sich in Richtung des Pfeils 73 drehende Antriebsrolle 72 in Richtung zur Antriebsanordnung 30 hin versetzt wird. Dabei wird das Antriebsfederelement 31 der Antriebsanordnung 30 gespannt. Hat der Eintreibstössel 13 seine Ausgangsstellung 22 erreicht, dann fällt die Klinke 51 der Sperreinrichtung 50 in die Sperrfläche 53 am Eintreibstössel 13 ein und hält diesen in der Ausgangsstellung 22. Der Motor 71 kann dann über die Steuereinheit 23 abgeschaltet werden und das Stellmittel 76 fährt die Antriebsrolle 72, ebenfalls gesteuert von der Steuereinheit 23, von ihrer eingekuppelten Stellung an dem Abtriebsmittel 75 und dem Eintreibstössel 13 in seine ausgekuppelte Stellung.

Zur Rückführung des Eintreibstössels 13 und zum Spannen des Antriebsfederelementes 31 wird, am Ende eines Eintreibvorganges die Spanneinrichtung 70 über die Steuereinheit 23 aktiviert, wenn das Eintreibgerät 10 wieder vom Werkstück W abgehoben wird. Wenigstens eines der Schaltmittel 29a, 29b liefert dazu ein Signal an die Steuereinheit 23. Über die Spanneinrichtung 70 wird der Eintreibstössel 13 in der bereits beschriebenen Weise gegen das Antriebsfederelement 31 der Antriebsanordnung 30 gefahren und das Antriebsfederelement 31 dabei erneut gespannt, bis die Klinke 51 wieder in ihre Sperrstellung 54 an der Sperrfläche 53 am Eintreibstössel 13 einfallen kann.

In den Fig. 2 bis 3 ist ein als Kabelbefestiger bzw. Kabelbinder ausgebildetes Konstruktions-Hilfselement 110 dargestellt, das an dem Mündungsteil 16 des bereits beschriebenen Eintreibgeräts 10 angeordnet ist. Das Konstruktions-Hilfselement 110 weist ein Basisteil 111 auf, an dem zur Kabelbefestigung seitlich an dem Basisteil 111 eine Bandführung 117 für ein in den Figuren nicht dargestelltes Kabelband angeordnet ist. Von dem Basisteil 111 ragt ein hülsenförmiger Führungsabschnitt 112 ab, der eine von einem Widerlager 114 umgebene Durchtrittsöffnung 113 für ein Befestigungselement 130 aufweist. An dem Führungsabschnitt 112 ist eine Stellkontur 115 angeordnet, über die, wie aus den Figuren 2 und 3 ersichtlich ist, der Elementenfühler 17 an dem Mündungsteil 16 des Eintreibgeräts 10 in Richtung des zweiten Pfeils 152 betätigbar ist, wenn das Konstruktions-Hilfselement 110 auf das Mündungsteil 16 in Richtung des ersten Pfeils 151 aufgesteckt wird (siehe Fig. 2). Durch die Betätigung des Elementenfühlers 17 des Eintreibgeräts 10 bis in seine Schaltstellung 42 wird über das betätigte erste Schaltmittel 29a die Steuereinheit 23 des Eintreibgeräts 10 in eine Vor-Setzbereitschaft versetzt.

In dem Führungsabschnitt 112 ist gleichzeitig auch eine Führung 116 für ein als länglicher Hohlstift ausgebildetes Tastelement 120 angeordnet. Das Tastelement 120 weist dabei einen axial verlaufenden Aufnahmeraum 123 auf, in den das Befestigungselement 130 eingesteckt wird und wo es dann reibschlüssig gehalten wird. Das Tastelement 120 verfügt über drei radial vom zentralen Stiftkörper abragende Vorsprünge 122, die in gleichmässigen Abständen zueinander angeordnet sind. An den Vorsprüngen 122 sind jeweils an deren in Aufsteckrichtung auf das Mündungsteil 16 hin liegenden Seiten Stellflächen 121 angeordnet, über die der Anpressfühler 18 am Mündungsteil 16 des Eintreibgeräts 10 betätigbar ist, wie aus Fig. 4 ersichtlich ist. Wird das Eintreibgerät 10 mit dem auf dem Mündungsteil 16 aufgesteckten Konstruktions-Hilfselement 110 an ein Werkstück W angedrückt, dann verschiebt sich das Tastelement 120 von seinem aus Fig. 2 ersichtlichen Ausgangszustand in Richtung des dritten Pfeils 153 zum Mündungsteil 16 hin. Die Stellflächen 121 an den Vorsprüngen 122 bewegen dabei den Anpressfühler 18 in Richtung des vierten Pfeils 154 in das Mündungsteil 16 hinein (siehe Fig. 3) bis in dessen Schaltstellung 44. Durch Überführung des Anpressfühlers 18 in seine Schaltstellung 44 wird das zweite Schaltmittel 29b betätigt und dadurch die Steuereinheit 23 des Eintreibgeräts 10 in Setzbereitschaft versetzt, so dass nur noch der Auslöseschalter bzw. Triggerschalter 19 des Eintreibgeräts 10 betätigt werden müsste, um einen Setzvorgang auszulösen. Diese Setzbereitschaft wird jedoch nur dann über die Steuereinheit 23 eingeleitet, wenn das erste Schaltmittel 29a und das zweite Schaltmittel 29b um mindestens 0,3 Sekunden versetzt und in der Reichenfolge erstes Schaltmittel 29a und dann zweites Schaltmittel 29b betätigt werden. Hierdurch wird eine manuelle Manipulation der Sicherheitseinrichtung mit dem Anpressfühler 18 und dem Elementenfühler 17 ausgeschlossen. Wird der Auslöseschalter 19 nun von einem Bediener betätigt, dann wird über die Steuereinheit 23 die Sperreinrichtung 50 in ihre Freigabestellung (in den Figuren nicht dargestellt) versetzt, wobei die Klinke 51 über den Stellmotor 52 von der Sperrfläche 53 am Eintreibstössel 13 abgehoben wird. Der Eintreibstössel 13 wird daraufhin über das Antriebsfederelement 31 der Antriebsanordnung 30 in Eintreibrichtung 27 bewegt, wobei ein Befestigungselement 130 in das Werkstück W eingetrieben wird.

Es versteht sich, dass das Konstruktions-Hilfselement 110 ebenfalls auch als Schalungsanschlag, Abstandhalter, Bewehrungshalter, Rohrschelle, Halteelement, Winkelelement, Deckenabhänger oder dgl. ausgebildet sein kann.

## Patentansprüche

1. Handgeführtes Eintreibgerät für Befestigungselemente, mit einer Antriebsanordnung (30) für einen Eintreibstössel (13), mit einem Auslöseschalter (19) zum Auslösen eines Eintreibvorgangs mittels der Antriebsanordnung (30) und mit einem versetzbar an einem Mündungsteil (16) angeordneten Anpressfühler (18) über den das Anpressen an ein Werkstück (W) detektierbar ist und der in einer Ausgangsstellung (41) das Auslösen eines Eintreibvorgangs verhindert und in einer Schaltstellung (43) ein Auslösen eines Eintreibvorgangs ermöglicht,
**dadurch gekennzeichnet,**
**dass** ein versetzbar am Mündungsteil (16) angeordneter Elementenfühler (17) vorgesehen ist, der unabhängig vom Anpressfühler (18) betätigbar ist, der in einer Ausgangsstellung (42) das Auslösen eines Eintreibvorgangs verhindert und in einer Schaltstellung (44) das Auslösen eines Eintreibvorgangs ermöglicht, wobei über den Elementenfühler (17) das Ansetzen eines Konstruktions-Hilfselements (110) an das Mündungsteil (16) detektierbar ist, und wobei ein Eintreibvorgang über den Auslöseschalter (19) nur dann auslösbar ist, wenn sich sowohl der Elementenfühler (17) als wie auch der Anpressfühler (18) in ihrer jeweiligen Schaltstellung (43, 44) befinden.

2. Eintreibgerät nach Anspruch 1, **dadurch gekennzeichnet, dass** der Elementenfühler (17) über eine Stellkontur (115) des Konstruktions-Hilfselements (110) von seiner Ausgangsstellung (41) in seine Schaltstellung (42) überführbar ist.

3. Eintreibgerät nach Anspruch 1 oder 2, **dadurch gekennzeichnet, dass** der Anpressfühler (18) über ein versetzbar geführtes Tastelement (120) des Konstruktions-Hilfselements (110) von seiner Ausgangsstellung (43) in seine Schaltstellung (44) überführbar ist.

4. Eintreibgerät nach einem der Ansprüche 1 bis 3, **dadurch gekennzeichnet, dass** der Elementenfühler (17) und der Anpressfühler (18) hülsenförmig ausgebildet sind, wobei beide konzentrisch zueinander im Mündungsteil (16) geführt sind.

5. Eintreibgerät nach Anspruch 4, **dadurch gekennzeichnet, dass** der Elementenfühler (17) innen im zweiten Anpressfühler (18) angeordnet ist und einen Eintreibkanal für Befestigungselemente (130) umfasst.

6. Eintreibgerät nach einem der Ansprüche 1 bis 6, **dadurch gekennzeichnet, dass** ein Eintreibvorgang über den Auslöseschalter (19) nur dann auslösbar ist, wenn der Elementenfühler (17) wenigstens 0,3 Sekunden vor dem Anpressfühler (18) in seine Schaltstellung (43) überführt wird.

7. Eintreibgerät nach einem der Ansprüche 1 bis 6, **dadurch gekennzeichnet, dass** eine elektrische Steuereinheit (23) vorgesehen ist und dass dem Elementenfühler (17) ein erstes elektrisches Schaltmittel (29a) und dem Anpressfühler (18) ein zweites elektrisches Schaltmittel (29b) zugeordnet ist, wobei beide Schaltmittel (29a, 29b) mit der Steuereinheit (23) verbunden sind und wobei die Steuereinheit (23) die Reihenfolge und den zeitlichen Abstand der Schaltsignale des ersten Schaltmittels (29a) und des zweiten Schaltmittels (29b) überwacht.

## Claims

1. Hand-held driving tool for fastening elements, comprising a drive unit (30) for a driving ram (13), a trigger switch (19) for initiating a driving process by means of the drive unit (30) and a contact sensor (18) arranged displaceably on a muzzle part (16) and designed to detect contact with a workpiece (W), said contact sensor preventing the initiation of a driving process in a normal position (41) and allowing for the initiation of a driving process in an operating position (43), **characterised by**
an element sensor (17) arranged displaceably on the muzzle part (16) and designed to be actuated independently of the contact sensor (18), said element sensor preventing the initiation of a driving process in a normal position (42) and allowing for the initiation of a driving process in an operating position (44), wherein the attachment of an auxiliary construction element (110) to the muzzle part (16) can be detected via the element sensor (17) and wherein a driving process can be initiated via the trigger switch (19) only when both the element sensor (17) and the contact sensor (18) are in their respective operating positions (43, 44).

2. Driving tool according to claim 1, **characterised in that** the element sensor (17) can be transferred from its normal position (41) to its operating position (42) via an actuating contour (115) of the auxiliary construction element (110).

3. Driving tool according to claim 1 or claim 2, **characterised in that** the contact sensor (18) can be transferred from its normal position (43) to its operating position (44) via a displaceably guided sensing element (120) of the auxiliary construction element (110).

4. Driving tool according to one of claims 1 to 3, **characterised in that** the element sensor (17) and the contact sensor (18) are sleeve-shaped, both being guided in the muzzle part (16) concentrically with one another.

5. Driving tool according to claim 4, **characterised in that** the element sensor (17) is arranged inside the second contact sensor (18) and includes a driving channel for fastening elements (130).

6. Driving tool according to one of claims 1 to 5, **characterised in that** a driving process can be initiated via the trigger switch (19) only when the element sensor (17) is transferred to its operating position (43) at least 0.3 seconds before the contact sensor (18).

7. Driving tool according to one of claims 1 to 6, **characterised in that** an electrical control unit (23) is provided and **in that** a first electrical switch means (29a) is associated with the element sensor (17) and a second electrical switch means (29b) is associated with the contact sensor (18), wherein both switch means (29a, 29b) are connected to the control unit (23) and wherein the control unit (23) monitors the sequence and the time interval of the switching signals of the first switch means (29a) and the second switch means (29b).

## Revendications

1. Appareil d'enfoncement tenu à la main pour des éléments de fixation, comportant un système d'entraînement (30) pour un piston d'enfoncement (13), un commutateur de déclenchement (19) pour déclencher un processus d'enfoncement au moyen du système d'entraînement (30), et un palpeur à pression (18) agencé de manière mobile sur une partie de bouche (16), palpeur par l'intermédiaire duquel la pression exercée sur une pièce (W) peut être détectée et qui, dans une position initiale (41), empêche le déclenchement d'un processus d'enfoncement et qui, dans une position de commutation (43), permet le déclenchement d'un processus d'enfoncement,
**caractérisé en ce que**
un capteur d'élément (17) agencé de manière mobile sur la partie de bouche (16) est prévu, lequel capteur peut être actionné indépendamment du palpeur à pression (18), empêche le déclenchement d'un processus d'enfoncement dans une position initiale (42) et permet le déclenchement d'un processus d'enfoncement dans une position de commutation (44), dans lequel le montage d'un élément auxiliaire de construction (110) sur la partie de bouche (16) peut être détecté par l'intermédiaire du capteur d'élément (17), et dans lequel un processus d'enfoncement ne peut être déclenché par le commutateur de déclenchement (19) que lorsque le capteur d'élément (17) ainsi que le palpeur à pression (18) se trouvent dans leur position de commutation respective (43, 44).

2. Appareil d'enfoncement selon la revendication 1, **caractérisé en ce que** le capteur d'élément (17) peut être transféré de sa position initiale (41) à sa position de commutation (42) par l'intermédiaire d'un contour de réglage (115) de l'élément auxiliaire de construction (110).

3. Appareil d'enfoncement selon la revendication 1 ou 2, **caractérisé en ce que** le palpeur à pression (18) peut être transféré de sa position initiale (43) à sa position de commutation (44) par l'intermédiaire d'un élément de détection (120), guidé de manière mobile, de l'élément auxiliaire de construction (110).

4. Appareil d'enfoncement selon l'une quelconque des revendications 1 à 3, **caractérisé en ce que** le capteur d'élément (17) et le palpeur à pression (18) sont construits en forme de douille, les deux étant guidés dans la partie de bouche (16) de manière concentrique l'un par rapport à l'autre.

5. Appareil d'enfoncement selon la revendication 4, **caractérisé en ce que** le capteur d'élément (17) est agencé à l'intérieur du palpeur à pression (18) et comporte un canal d'enfoncement pour des éléments de fixation (130).

6. Appareil d'enfoncement selon l'une quelconque des revendications 1 à 5, **caractérisé en ce qu'**un processus d'enfoncement ne peut être déclenché par le commutateur de déclenchement (19) que lorsque le capteur d'élément (17) est transféré au moins 0,3 seconde avant que le palpeur à pression (18) soit dans sa position de commutation (43).

7. Appareil d'enfoncement selon l'une quelconque des revendications 1 à 6, **caractérisé en ce qu'**une unité de commande électrique (23) est prévue, et **en ce que** des premiers moyens de commutation électriques (29a) sont associés au capteur d'élément (17) et des seconds moyens de commutation électriques (29b) sont associés au palpeur à pression (18), les deux moyens de commutation (29a, 29b) étant reliés à l'unité de commande (23), et l'unité de commande (23) surveillant la séquence et l'intervalle de temps des signaux de commutation des premiers moyens de commutation (29a) et des seconds moyens de commutation (29b).
